# DEMANDE DE BREVET EUROPEEN

(11) **EP 2 025 548 A1**
(43) Date de publication de la demande: **18.02.2009**
(21) Numéro de dépôt: 08290733.8
(22) Date de dépôt: 30.07.2008
(51) Int. Cl.: B60J 5/00, B60J 5/06

(54) **Élément de véhicule comprenant au moins une ossature de cabine de véhicule et véhicule comprenant un tel élément de véhicule**

(30) Priorité: 31.07.2007 FR 0705575
(71) Demandeur: Cabines Denizet, 28310 Toury (FR)
(72) Inventeur: Denizet, Gilles, 45170 Neuville Aux Bois (FR)
(74) Mandataire: Oudin, Stéphane

(57) **Abrégé**

La présente invention concerne un élément de véhicule comprenant au moins une ossature de cabine (2) de véhicule destinée à recevoir - une porte (14) du type comprenant un haut de porte (16) et un bas de porte (18) monté pivotant par rapport au haut de porte, et - un dispositif de guidage pour le déplacement de la porte, entre une position ouverte et une position fermée, et réciproquement, comportant un premier moyen de guidage pour le coulissement de la porte selon le sens longitudinal du véhicule. L'élément de véhicule étant remarquable en ce qu'il comprend une roulette (26) montée sur l'élément de véhicule et agencée pour assurer un contact sans glissement avec un élément (22) du bas de porte (18) lors du basculement de celle-ci.

Elle concerne également une cabine de véhicule comprenant un tel dispositif d'actionnement.

## Description

La présente invention concerne un élément de véhicule comprenant au moins une ossature de cabine de véhicule. Elle concerne également un véhicule comprenant un tel élément de véhicule.

Nombre de véhicules, notamment des véhicules utilitaires ou des engins de manutention, sont pourvus de portes montées coulissantes sur des glissières solidaires de leur châssis. On connaît en particulier un véhicule dont les portes sont constituées de deux parties, un haut de porte monté coulissant sur l'ossature de cabine de véhicule et un bas de porte monté pivotant par rapport au haut de porte.

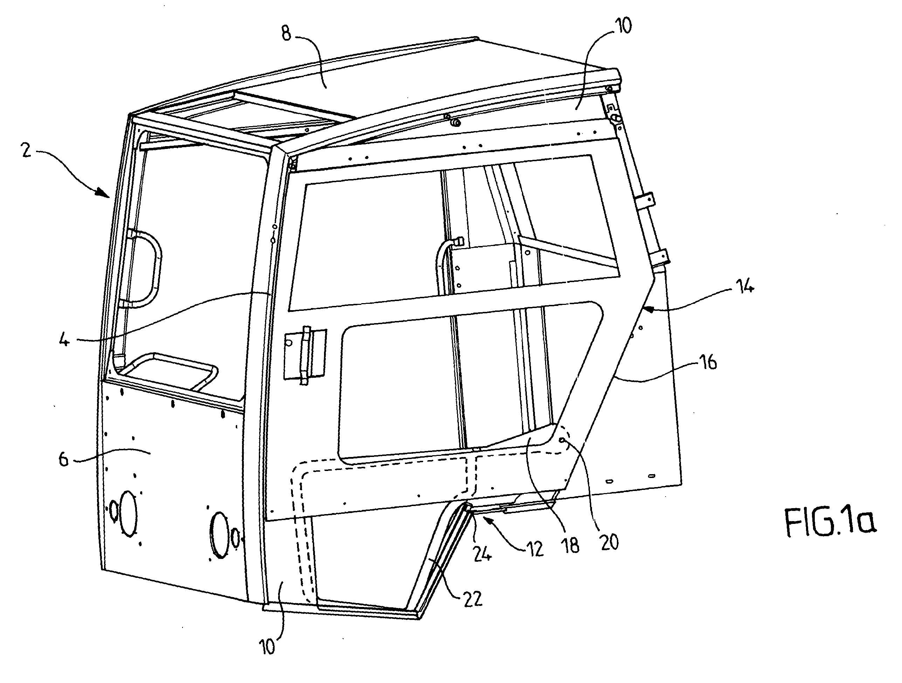

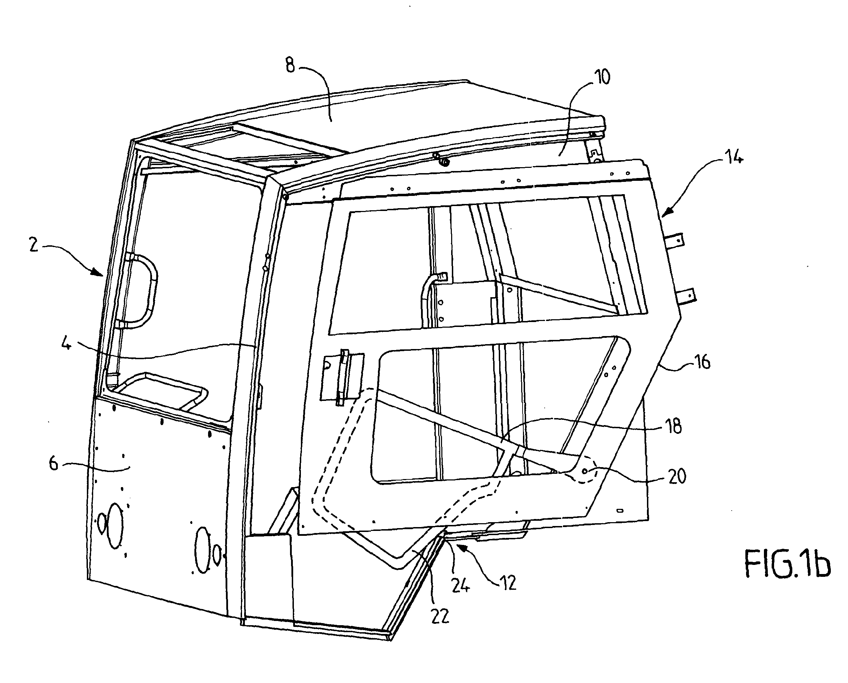

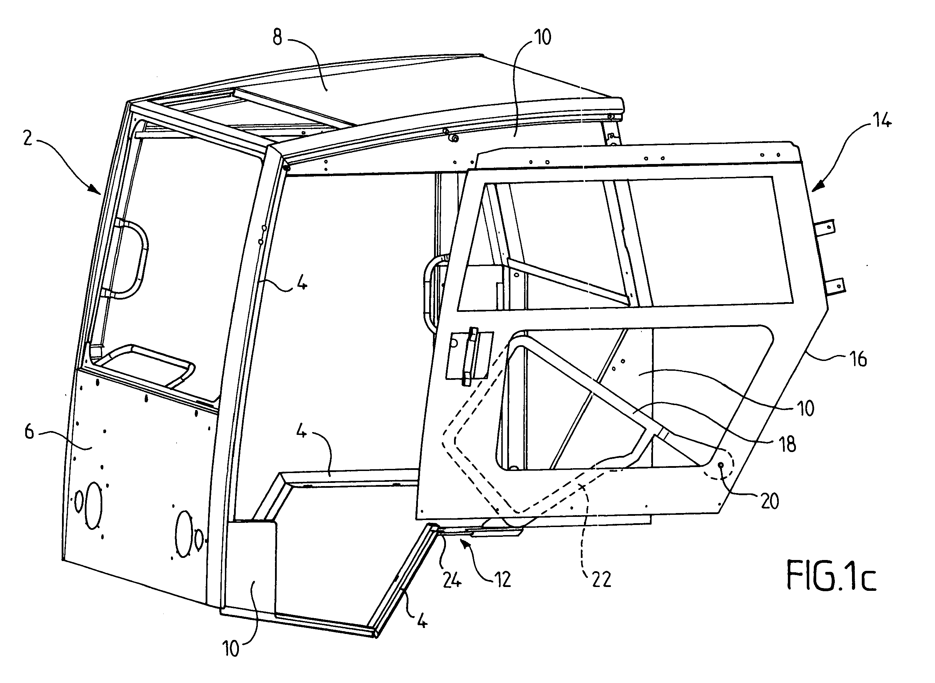

Un tel élément de véhicule connu et équipé d'une porte est représenté sur les figures 1a, 1b et 1c, cette porte étant respectivement représentée sur ces figures en position fermée, en position partiellement ouverte et en position ouverte.

L'élément de véhicule comprend essentiellement une ossature soudée 2 formée d'une pluralité de montants tels que les montants 4 définissant ensembles une cage. Cette ossature est destinée à recevoir des plaques formant paroi. Dans le mode de réalisation représenté, l'élément de véhicule est déjà équipé d'une plaque avant 6, d'une plaque de toit 8 et de plaques de rigidification 10.

Dans de nombreuses circonstances, le véhicule est amené à évoluer dans un milieu à manoeuvrabilité réduite ce qui impose qu'il ait un faible encombrement. C'est le cas par exemple des véhicules de manutention utilisés pour le transport des bagages entre un terminal d'aéroport et un avion. Dans ce cas, on veillera à ce que le véhicule ait une longueur réduite, ce qui se traduira par un élément de véhicule pourvu d'un décrochement 12 dans sa partie inférieure pour le passage de l'essieu et des roues, de sorte que l'ouverture de porte comprend une partie avant descendant plus près du sol qu'une partie arrière.

De même, toujours pour des raisons d'encombrement, les portes du véhicule sont généralement des portes coulissantes.

Enfin, il est souvent nécessaire que la porte obture en totalité l'ouverture de porte, tant pour des raisons de sécurité que pour s'affranchir autant que possible de conditions climatiques extérieures qui peuvent s'avérer difficiles.

Par suite, le véhicule est équipé d'une porte 14 en deux parties, c'est-à-dire d'un haut de porte 16 et d'un bas de porte 18. Le haut de porte 16 est apte à coulisser dans le sens longitudinal du véhicule en étant guidé par un dispositif de guidage (non représenté) monté sur l'élément de véhicule. Pour une meilleure clarté des figures, les parties des montants du bas de porte 18, normalement masquées car situées derrière le haut de porte 16, ont été représentées en tireté.

Le bas de porte 18 est monté pivotant par rapport au haut de porte par l'intermédiaire d'un pivot 20 dont l'axe correspond au sens transversal de l'élément de véhicule.

On comprend que le coulissement vers l'arrière du haut de porte 16 entraîne le basculement autour de l'axe 20 du bas de véhicule du fait que le montant arrière 22 du bas de porte se déplace avec frottement contre une partie de l'ossature 2 de la cabine de véhicule en une zone de contact 24.

Le Demandeur a constaté que ceci constitue un inconvénient important car en fonction de la forme et de l'usure entre le bas de porte et la partie angulaire, les efforts ne sont pas réguliers ce qui pose un problème pour manoeuvrer correctement la porte.

L'invention a pour but de remédier à cet inconvénient.

A cette fin, l'invention a pour objet un élément de véhicule comprenant au moins une ossature de cabine de véhicule destinée à recevoir :
- une porte du type comprenant un haut de porte et un bas de porte monté pivotant par rapport au haut de porte, et
- un dispositif de guidage pour le déplacement de la porte, entre une position ouverte et une position fermée, et réciproquement, comportant un premier moyen de guidage pour le coulissement de la porte selon le sens longitudinal du véhicule,
ledit élément de véhicule étant remarquable en ce qu'il comprend une roulette montée sur l'élément de véhicule et agencée pour assurer un contact de frottement sans glissement avec un élément du bas de porte lors du basculement de celle-ci.

De manière avantageuse, la roulette est cylindrique. Elle peut en outre comporter une gorge pour assurer un guidage latéral de l'élément de bas de porte lors de son basculement.

De préférence, la roulette est montée sur un roulement à billes.

Selon un mode de réalisation préféré, la roulette est montée sur l'ossature de cabine.

Selon un mode particulier de réalisation, l'élément de véhicule comporte en outre un châssis sur lequel est montée l'ossature de cabine, la roulette étant montée sur ledit châssis.

L'élément de véhicule peut comporter en outre :
- une porte du type comprenant un haut de porte et un bas de porte monté pivotant par rapport au haut de porte, et
- un dispositif de guidage pour le déplacement de la porte, entre une position ouverte et une position fermée, et réciproquement, comportant un premier moyen de guidage monté sur l'ossature de cabine pour le coulissement de la porte selon le sens longitudinal du véhicule.

L'invention a également pour objet comprenant un élément de véhicule selon l'invention.

L'invention sera mieux comprise à la lumière de la description, faite à titre illustratif et non limitatif, en référence aux dessins annexés sur lesquels :
- les figures 1a, 1b et 1c, déjà décrites, représentent en perspective un élément de véhicule, selon l'art antérieur, comportant une porte respectivement en position fermée, en position partiellement ouverte et en position ouverte,
- les figures 2a, 2b et 2c représentent en perspective un élément de véhicule, selon l'invention, comportant une porte respectivement en position fermée, en position partiellement ouverte et en position ouverte,
- la figure 3 est une vue agrandie de l'élément de véhicule selon l'invention au niveau de la roulette, et
- les figures 4 et 5 illustrent des variantes de la figure 3 dans lesquelles la roulette est montée sur le châssis recevant l'élément de véhicule.

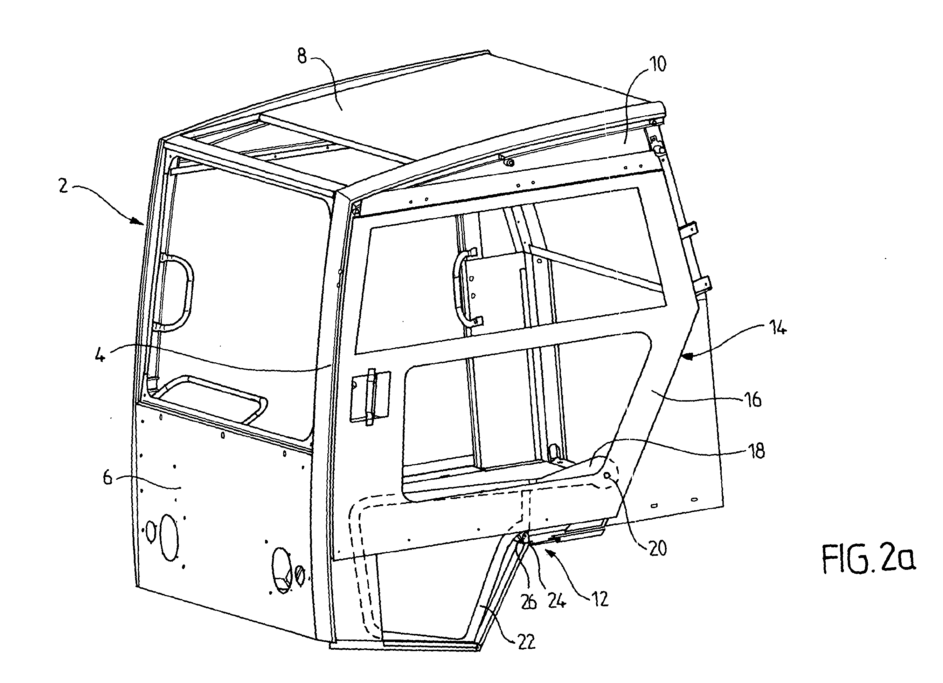

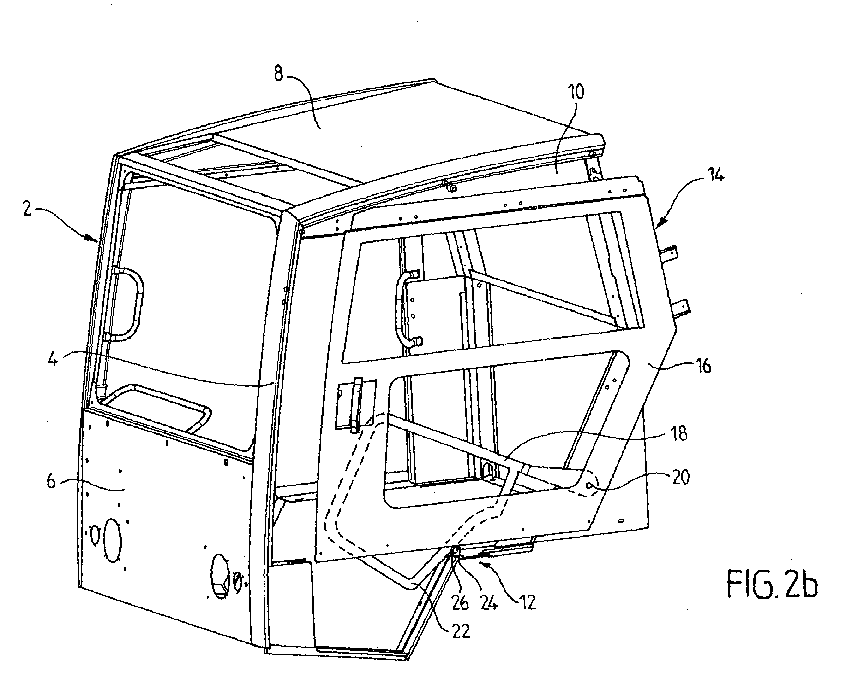

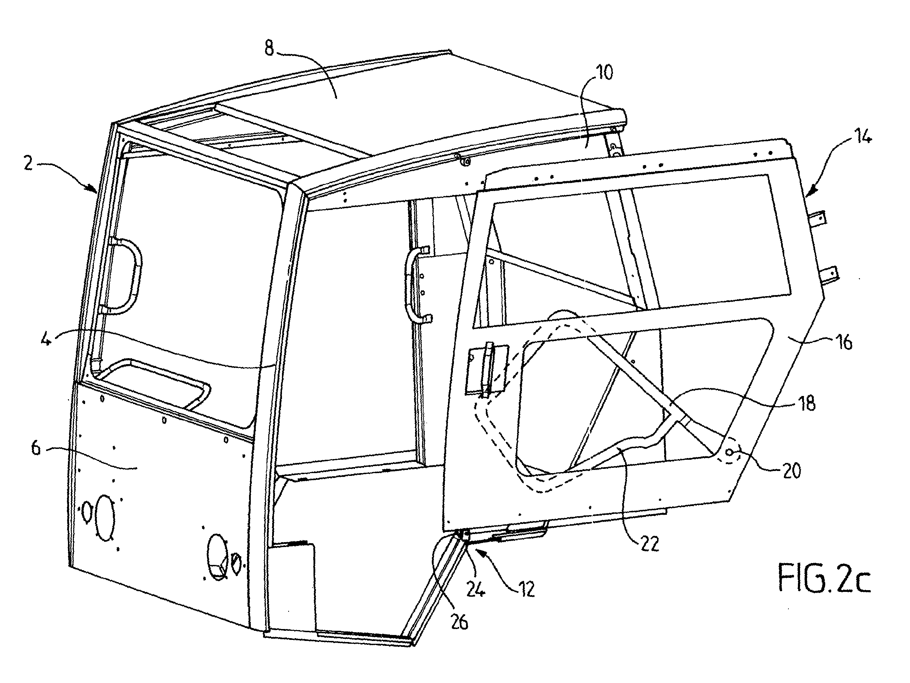

Sur les figures 2a à 2c, les éléments identiques à ceux des figures 1a à 1c portent les mêmes références numériques.

Ainsi, les figures 2a à 2c représentent un élément de véhicule qui se compose essentiellement d'une ossature soudée 2 formée d'une pluralité de montants tels que 4 définissant ensembles une cage. Cette ossature est destinée à recevoir des plaques formant paroi. Dans le mode de réalisation représenté, l'élément de véhicule est déjà équipé d'une plaque avant 6, d'une plaque de toit 8 et de plaques de rigidifications 10. L'élément de véhicule est pourvu d'un décrochement 12 dans sa partie inférieure pour le passage de l'essieu et des roues.

L'élément de véhicule représenté est équipé d'une porte 14 sur son côté gauche. Cette porte comporte des évidements destinés à recevoir des parois transparentes telles que vitrage ou feuille plastique. Le côté droit pourrait être également équipé d'une porte similaire ou d'un panneau fixe comportant lui aussi une paroi transparente pour des raisons de sécurité lors du déplacement du véhicule.

Cette porte 14 est en deux parties, c'est-à-dire un haut de porte 16 et un bas de porte 18. Le haut de porte 16 est apte à coulisser dans le sens longitudinal du véhicule en étant guidé par un dispositif de guidage (non représenté) monté sur l'élément de véhicule. Pour une meilleure clarté des figures, les parties des montants du bas de porte 18, normalement masquées car situées derrière le haut de porte, ont été représentées en tireté.

Le bas de porte 18 est monté pivotant par rapport au haut de porte par l'intermédiaire d'un pivot 20 dont l'axe correspond au sens transversal de l'élément de véhicule.

Lors du coulissement vers l'arrière de la porte, le bas de porte 18 est entraîné par le haut de porte 16, le montant arrière 22 du bas de porte étant en contact avec une zone de contact 24 du décrochement 12.

Selon l'invention, pour remédier aux inconvénients de l'art antérieur, cette zone de contact 24 est équipée d'une roulette 26 montée sur un axe selon la direction transversale du véhicule.

On comprend qu'ainsi le contact avec le montant arrière 22 du bas de porte et la roulette de l'élément de véhicule est un contact de frottement sans glissement.

Par "sans glissement", on entend que la roulette est animée d'un mouvement de rotation au point de contact avec le montant arrière du bas de porte et donc que la vitesse de glissement entre le montant arrière du bas de porte et la roulette est faible. De manière idéale, le frottement est parfait, c'est-à-dire que la différence de vitesse au point de contact entre le montant du bas de porte et la roulette est nulle. On comprend qu'un faible degré de glissement au point de contact peut être causé par de nombreux paramètres tels que l'état de surface des pièces en contact, leur poids, la vitesse d'ouverture de la porte, etc... sans remettre en cause le caractère essentiellement de frottement sans glissement du contact.

L'absence ou le faible degré de glissement entre le montant arrière du bas de porte et la roulette constitue une différence fondamentale par rapport à l'art antérieur représenté sur les figures 1a à 1c où le frottement au point de contact est essentiellement un frottement de glissement.

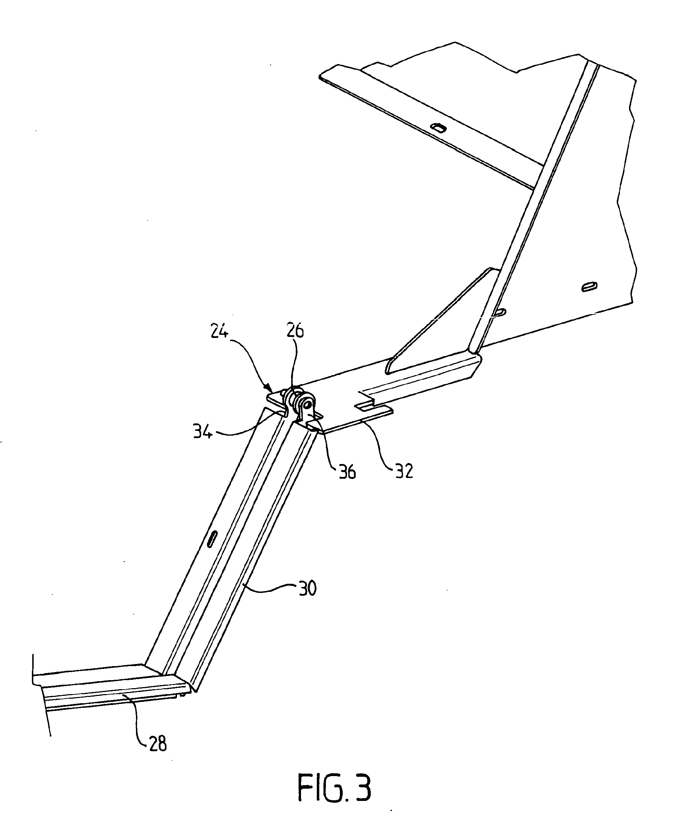

On a représenté sur la figure 3, sous forme agrandie, une partie de l'élément de véhicule au niveau de la zone de contact 24 entre le bas de porte et l'ossature de cabine du véhicule. On y voit un montant 28 horizontal, un montant 30 incliné vers le haut et l'arrière du véhicule et un montant 32 horizontal qui définissent ensemble la partie inférieure de l'ouverture de porte.

La zone de contact 24 se situe dans la zone où les montants 30 et 32 se rejoignent. A cet endroit, une roulette 24 est montée mobile en rotation suivant un axe transversal au véhicule, cet axe étant lui-même assujetti à l'un des montants 30, 32 par deux ailes 34, 36.

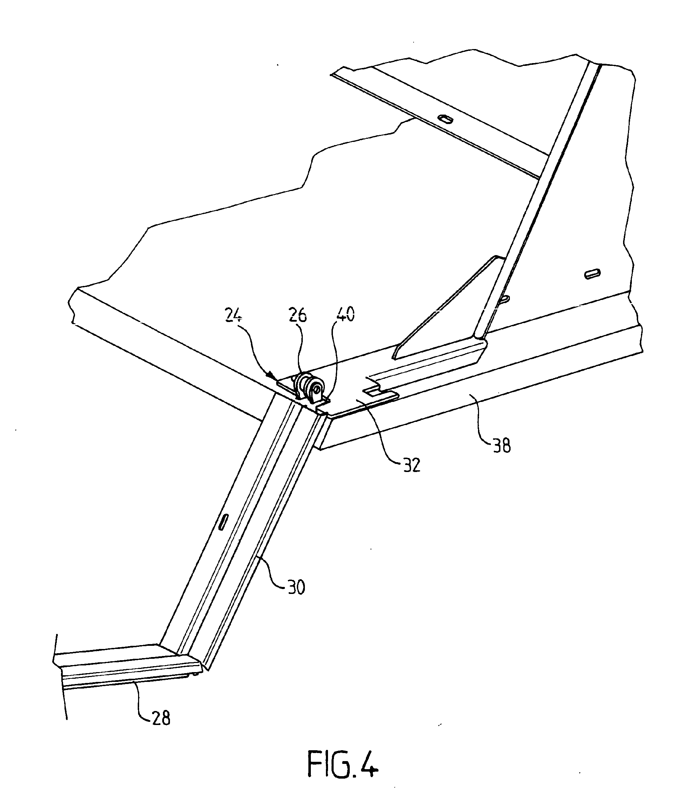

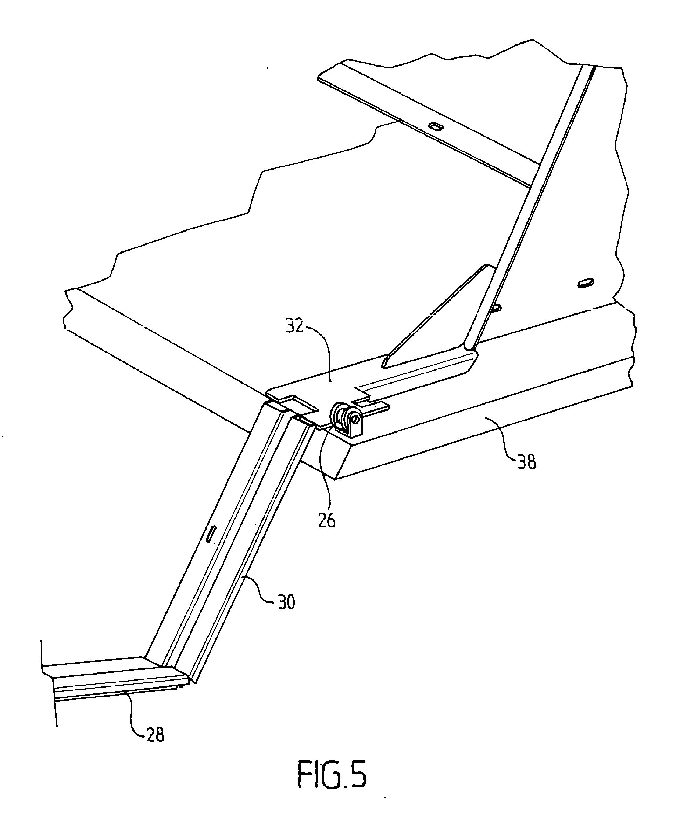

Il n'est pas essentiel que la roulette soit montée sur l'ossature de cabine 2. Comme représenté sur la figure 4, elle peut également être montée sur le châssis 38 recevant l'ossature de cabine et traverser une lumière 40 formée dans l'un des montants. Elle pourrait encore être montée sur le châssis 38 dans une position décalée latéralement par rapport aux montants 30, 32, comme représenté sur la figure 5.

## Revendications

1. Elément de véhicule comprenant au moins une ossature de cabine (2) de véhicule destinée à recevoir :
- une porte (14) du type comprenant un haut de porte (16) et un bas de porte (18) monté pivotant par rapport au haut de porte, et
- un dispositif de guidage pour le déplacement de la porte, entre une position ouverte et une position fermée, et réciproquement, comportant un premier moyen de guidage pour le coulissement de la porte selon le sens longitudinal du véhicule,
ledit élément de véhicule étant **caractérisé en ce qu'**il comprend une roulette (26) montée sur l'élément de véhicule et agencée pour assurer un contact sans glissement avec un élément (22) du bas de porte (18) lors du basculement de celle-ci.

2. Elément de véhicule selon la revendication 1, **caractérisé en ce que** la roulette (26) est cylindrique.

3. Elément de véhicule selon la revendication 1, **caractérisé en ce que** la roulette (26) comprend une gorge pour assurer un guidage latéral de l'élément (22) de bas de porte lors de son basculement.

4. Elément de véhicule selon l'une des revendications 2 ou 3, **caractérisé en ce que** la roulette (26) est montée sur un roulement à billes.

5. Elément de véhicule selon l'une des revendications précédentes, **caractérisé en ce que** la roulette (26) est montée sur l'ossature de cabine (2).

6. Elément de véhicule selon l'une des revendications précédentes, **caractérisé en ce qu'**il comporte en outre un châssis (38) sur lequel est montée l'ossature de cabine (2), la roulette (26) étant montée sur ledit châssis (38).

7. Elément de véhicule selon l'une des revendications précédentes **caractérisé en ce qu'**il comprend:
- une porte (14) du type comprenant un haut de porte (16) et un bas de porte (18) monté pivotant par rapport au haut de porte, et
- un dispositif de guidage pour le déplacement de la porte, entre une position ouverte et une position fermée, et réciproquement, comportant un premier moyen de guidage monté sur l'ossature de cabine pour le coulissement de la porte selon le sens longitudinal du véhicule.

8. Véhicule comprenant un élément de véhicule selon l'une des revendications précédentes.
